(19) Europäisches Patentamt
European Patent Office
Office européen des brevets

(11) **EP 3 311 017 B1**

(12) **EUROPEAN PATENT SPECIFICATION**

(45) Date of publication and mention
of the grant of the patent:
**17.06.2020 Bulletin 2020/25**

(21) Application number: **16731947.4**

(22) Date of filing: **09.06.2016**

(51) Int Cl.:
*F02D 13/02* *(2006.01)*    *F02D 35/02* *(2006.01)*

(86) International application number:
**PCT/FI2016/050411**

(87) International publication number:
**WO 2016/203102 (22.12.2016 Gazette 2016/51)**

(54) **A METHOD AND AN APPARATUS FOR CONTROLLING AN INTERNAL COMBUSTION ENGINE**

VERFAHREN UND VORRICHTUNG ZUM STEUERN EINER BRENNKRAFTMASCHINE

PROCÉDÉ ET APPAREIL DE CONTRÔLE D'UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2015 FI 20155465**

(43) Date of publication of application:
**25.04.2018 Bulletin 2018/17**

(73) Proprietor: **Wärtsilä Finland Oy**
**65100 Vaasa (FI)**

(72) Inventors:
• **KAAS, Tom**
**FI-65101 Vaasa (FI)**
• **SAIKKONEN, Ari**
**FI-65101 Vaasa (FI)**

(74) Representative: **Genip Oy**
**Heikinkatu 7**
**48100 Kotka (FI)**

(56) References cited:
EP-A1- 1 342 899            EP-A1- 2 535 545
DE-A1-102008 060 063        DE-B3-102013 220 831
FR-A3- 2 892 459            US-A1- 2004 144 082
US-A1- 2010 077 992

## Description

### Technical field

The present invention relates to a method of operating an internal combustion piston engine according to the preamble of claim 1.

The present invention relates also to an internal combustion piston engine.

### Background art

The operational requirements of combustion engines are becoming more and more demanding. Exhaust gas emission requirements of internal combustion piston engines become more and more stringent. On the other hand, it is not desirable that the overall performance of the engine will suffer resulted from actions aiming to reduce the emissions. In order to cope with such requirements there are various techniques available by means of which the gaseous emissions may be controlled when the engine is running. For example, the closing timing of the inlet valves plays significant role in the engine performance and combustion process. Namely, the operation of the inlet valves has an effect of temperature and pressure prevailing in the cylinder and thus a formation of gaseous pollutants such as NOx emissions. Therefore, it is extremely undesirable that malfunctions occur in the operation of the inlet valve which has a particular impact on the cylinder pressure.

Particularly, cylinder pressure gives valuable information about the combustion process of an internal combustion piston engine and the inlet valve controls the pressure in the cylinder. EP 2570637 A2 discloses a variable valve mechanism for varying opening areas or the working angles of at least either the intake valves or the exhaust valves. A pressure in the cylinder is calculated based on the opening area or the working angle of at least either the intake valve or the exhaust valve varied by the variable valve mechanism and the internal combustion engine is controlled based on the pressure in the cylinder.

WO 2014/126737 A1 discloses a control system of a gaseous fuelled engine with a cam phaser for improving the engine start. The control system may have variable inlet valve timing device configured to adjust a cyclical opening and closing timing of the inlet valve. A controller may be configured to selectively initiate a first Miller cycle timing and a second Miller cycle timing.

US 2012279218 A1 discloses a Miller cycle engine, which includes an intake variable unit for controlling timing to open or close an intake valve. The valve closing timing control unit is configured to calculate an optimum timing for closing the intake valve based on the detected pressure value and to output a control signal to an intake valve variable unit.

US 2010/077992 discloses a method of detecting an abnormal combustion for internal combustion engines based on a cylinder pressure model.

However, due to the fact that the inlet valve operates in harsh circumstances, malfunctions may occur in the inlet valve operation. In a case of a malfunction in operation of the inlet valve system, particularly controlling the closing timing of the inlet valve, pressure in the cylinder may increase significantly which has undesirable consequences. Particularly, if the inlet valve closes too late, for example when the piston is at the bottom dead center position, the pressure in the cylinder may increase significantly that may even damage the inlet valve system and parts in connection with the cylinder. It is extremely unwanted that the pressure in the cylinder increases over an undesirable limit.

An object of the invention is to provide a method of operating an internal combustion piston engine by means of which the operational safety is considerably improved compared to the prior art solutions.

### Disclosure of the Invention

The objects of the invention can be met substantially as is disclosed in the independent claims and in the other claims describing more details of different embodiments of the invention.

According to the invention in method of operating an internal combustion piston engine during the engine is running, and during the cycle of the cylinder an estimated compression pressure for the cylinder is determined by measuring pressure in the cylinder after closing the inlet valve or valves at least at one predetermined crank angle position (0) during a compression phase, the estimated compression pressure is compared to a preset reference pressure and in case the estimated compression pressure is greater than the reference pressure, a portion of gas is admitted out of the cylinder during the compression phase and prior to ignition of charge in the cylinder.

This provides a method of operating an internal combustion piston engine in more reliable and safe manner. By means of the present invention it is possible to take necessary measure before the cylinder pressure rises too high. Advantageously, possible high cylinder pressure situation is estimated before it actually occurs, so that necessary steps are executed to prevent the pressure from rising too high before the ignition of the charge in the cylinder. This is accomplished according to the invention by admitting a portion of gas out of the cylinder before a start of an ignition.

By means of the present invention it is possible the remedy a potential problem cause for example by too late closing of the inlet valve. This will improve and stabilize the combustion process. In addition, the pressure prevailing in the cylinder is kept at an adequate level that is not greater than a reference set pressure. The present invention has an impact on the pressure in the cylinder so that the peak compression remains also at an adequate level. It can be said that the method provides a predictive protection for too high compression pressure. It should be noted that in the context of the invention the term *gas*, in the phrase *admitting a portion of the gas out of the cylinder* may be pure air or a mixture of the air and fuel, or a mixture of the air, fuel and other gases such as recycled exhaust gases of the engine. This depends on the actual application of the invention.

As a further development of the invention also the pressure rise by the combustion of the fuel is taken into account. Since the effect of the combustion to the pressure in the cylinder adds up to the compression pressure, it is possible to avoid excessive total peak pressure in the cylinder as well.

According to the invention the estimated compression pressure is determined for a first crank angle position ($\theta_1$) when the actual crank angle position is less than the first crank angle position ($\theta_1$), and the estimated compression pressure is compared to a pre-set reference pressure set for the first crank angle position ($\theta_1$) and in case the estimated compression pressure is greater than the reference pressure, a portion of gas is admitted out of the cylinder during the compression phase and prior the cycle reaches the first crank angle position ($\theta_1$).

This provides an effect of being capable of react to potentially excessive pressures before such occurs.

According to an embodiment of the invention, the method comprises a step wherein the portion of gas is admitted in a controlled manner so that the portion of gas is a controlled amount of gas admitted out of the cylinder during the compression phase and prior to ignition of charge in the cylinder. This way it is possible to control the pressure in the cylinder to be as optimal as possible.

According to an embodiment of the invention the reference pressure is predetermined for the compression pressure such that the effect of the combustion is taken into account and even after the combustion the peak pressure in the cylinder remains at adequate level.

According to an embodiment of the invention, the estimated compression pressure is a peak compression pressure. Thus if the estimated peak compression pressure is greater than the pre-set compression pressure, the gas is admitted from the cylinder. This stabilizes the combustion process and controls the peak compression pressure to be at a desirable level.

According to an advantageous embodiment of the invention, the estimated peak compression pressure for the cylinder is compared to the pre-set compression pressure that is a pre-set reference peak pressure. This means that there is a set maximum value for the peak compression pressure which is not allowed to exceed. This protects the inlet valve, parts arranged in connection with the cylinder and the engine.

According to an embodiment of the invention, the estimated compression pressure is determined for each cylinder separately. This will provide accurate operation and stable operation of the engine.

The estimated compression pressure is determined during compression phase i.e. when all of the gas exchange valves are closed, after BDC. Here BDC refers to bottom dead center position of the piston and TDC refers to top dead center position of the piston.

According to an embodiment of the invention, the method comprises step of admitting a portion of gas out of the cylinder during the compression phase prior to introduction of fuel into the cylinder. This embodiment of the invention may be applied in different kinds of engines. Firstly, this may be applied to direct injection gas engine where the gaseous fuel is not introduced as pre-mixed with the combustion air, but as direct injection.

Secondly, the engine may be a gas engine where the gaseous fuel is as pre-mixed with the combustion air and the mere fuel introduction directly to the cylinder is for ignition purpose i.e. a so called pilot fuel.

As an optional measure for direct-injection of fuel, the amount of injected fuel may be decreased or the injection may even be disabled in the cylinder where, and during the cycle which, the method is applied.

As an optional measure for pre-mixed gas engine the application of ignition energy, such as formation of a spark, may be disabled in the cylinder where, and during the cycle which, the method is applied.

As an optional measure for pilot injected pre-mixed gas engine the application of ignition energy, such as formation of a spark may be disabled in the cylinder where, and during the cycle which, the method is applied.

The method according to the invention is applicable for both liquid and gaseous fuel engines, and to both compression, or auto ignition combustion and ignition with additional energy source such as spark or plasma ignition.

According to an embodiment of the invention, the estimated compression pressure is determined by measuring pressure in the cylinder after closing the inlet valve at least at one predetermined crank angle position during a compression phase.

According to an embodiment of the invention, the estimated compression pressure is determined by measuring pressure in the cylinder at more than one predetermined crank angle positions during a compression phase after closing the inlet valve. In practice, taking several measurements the estimate for the compression pressure will be improved.

According to an embodiment of the invention, the estimated compression pressure is determined based on measurements of pressure measured at less than ten distinct predetermined crank angle positions ($\theta$) during a compression phase.

According to further embodiment of the invention the estimated compression pressure is determined based on measurements of pressure measured at more than one but less than ten distinct predetermined crank angle positions ($\theta$) during a compression phase for providing one estimated compression pressure.

According to further embodiment of the invention the estimated compression pressure is determined at latest at crank angle ($\theta$) of 80 degrees before top dead center during a compression phase.

According to further embodiment of the invention during the cycle of the cylinder the inlet valve or valves of the cylinder are closed before the BDC and in the method the closing timing of the inlet valve or valves is controlled making use of the estimated peak compression pressure of the previous cycle of the cylinder, and during the cycle of the cylinder after closing an inlet valve or valves of the cylinder a fresh estimated peak compression pressure for the cylinder is determined, and the fresh estimated peak compression pressure is compared to a pre-set reference peak pressure and in case the estimated compression pressure is greater than the reference pressure, a portion of gas is admitted out of the cylinder during the compression phase and prior to ignition of charge in the cylinder.

According to further embodiment of the invention a number the estimated peak compression pressure values of the previous cycles of the cylinder are stored in a readable memory unit.

According to further embodiment of the invention the estimated peak compression pressure values of the previous cycles of the cylinder are stored in a readable memory unit as a function of one or more of the following state parameters: engine rotational speed, engine load, charge pressure, inlet valve closing crank angle; and the estimated compression pressure peak value of the previous cycles used for executing the step of the closing of the inlet valve or valves, is selected by defining condition parameters in the current cycle and using the estimated compression pressure peak value from the readable memory unit which match best to the condition parameters in the current cycle.

According to an embodiment of the invention, the estimated peak compression pressure is obtained using measured pressure value or values and volume information of the cylinder as follows: At first, the polytrophic relation is written in terms of pressure $p$ and volume $V$ in the cylinder at a certain crank angle position as

$$pV^{\gamma} = C,$$

where $\gamma$ is a so-called polytrophic index and $C$ is a constant (a real number). Furthermore, it is possible to write the polytrophic relation as follows

$$p_n V_n^{\gamma} = p_{TDC} V_{TDC}^{\gamma},$$

where $p_n$ is a measured pressure during a compression phase at a certain volume $V_n$ in the cylinder, $p_{TDC}$ is the cylinder pressure at the top dead center position and $V_{TDC}$ is the cylinder volume at the top dead center position. Rearranging the terms, one finds the estimate for the peak compression pressure (pressure at the top dead center position) as

$$p_{TDC} = p_n \left( \frac{V_n}{V_{TDC}} \right)^{\gamma}.$$

Estimation accuracy can be improved by increasing the number of pressure measurements. In case of several measurements of the cylinder pressure and a better estimate for the peak compression pressure $p_{TDC}$ is obtained using, for example, the least squares estimation.

According to an embodiment of the invention the polytrophic index $\gamma$ is a pre-configured value.

According to the invention, the portion of gas is admitted out from the cylinder by a safety valve arrangement arranged to open into the cylinder.

In normal operation of the engine where the pressure level in the cylinder remains at safe levels, the safety valve remains closed but in case of unusual operational conditions, when the pressure in cylinder is tending to exceed the pre-set compression pressure, the safety valve is arranged to open.

According to an embodiment of the invention, the gas admitted from the cylinder is cooled prior to admitting to the surrounding air.

According to an embodiment of the invention, the pressure of the gas admitted from the cylinder is reduced prior to admitting to the surrounding air.

An internal combustion piston engine according to the invention comprises at least one pressure sensor in connection with a cylinder, and a measuring unit arranged to measure pressure with said at least one pressure sensor after the inlet valve is closed and before fuel is ignited at least at one predetermined crank angle position, a determination unit arranged to determine an estimated compression pressure at least at a second crank angle position by using the at least one measured cylinder pressure and a control unit arranged to control an operation of a safety valve arrangement adapted in connection with the cylinder in a response of the estimated compression pressure.

According to an embodiment, the internal combustion piston engine is a gas engine or a dual fuel engine.

According to an embodiment of the invention, the safety valve arrangement comprises a handling unit for cooling and decreasing pressure of a portion of the admitted gas from the cylinder.

According to an embodiment of the invention, the safety valve arrangement comprises at least one safety valve arranged in a liner of the cylinder.

According to an embodiment of the invention, the safety valve arrangement comprises at least one safety valve arranged in a cylinder head.

According to another embodiment of the invention, the safety valve comprises an adequately quickly operable valve.

According to an embodiment of the invention

the safety valve is a start valve, i.e. a gas admission valve of an existing pressurized air start system of the engine. The start valve is for example a solenoid valve. In this case the start valve is primarily used as a start valve and secondarily as a safety valve. In case the start valve acts as a safety valve, the portion of gas is admitted out of the cylinder via the start valve into the start air channel wherefrom the gas is admitted out.

According to an embodiment of the invention, the safety valve arrangement comprises a safety valve having a piezoelectric crystal sensor. The piezoelectric crystal sensor is arranged to operate the safety valve.

The control unit of the internal combustion engine is provided with executable instructions to execute the method according on anyone of the appended method claims.

**Brief Description of Drawings**

In the following, the invention will be described with reference to the accompanying exemplary, schematic drawings, in which

Figure 1 illustrates a flow diagram of operating an internal combustion piston engine according to an embodiment of the invention,
Figure 2 illustrates an internal combustion piston engine having a safety valve arrangement according to an embodiment of the invention,
Figure 3 illustrates an internal combustion piston engine having a safety valve arrangement according to an embodiment of the invention, and
Figure 4 illustrates a graph of two pressure curves: a measured pressure curve and an estimated pressure curve in one cylinder according to an embodiment of the invention.

**Detailed Description of Drawings**

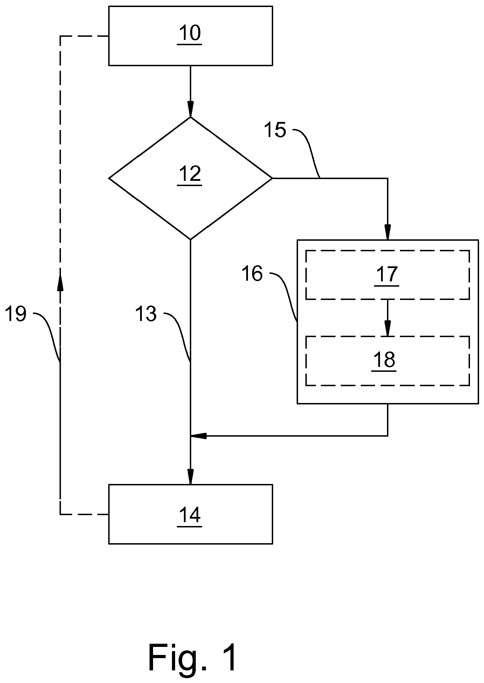

Figure 1 depicts schematically a flow diagram of operating an internal combustion piston engine. During a cycle of the operation of a cylinder, after closing an inlet valve or valves, the method comprises a step 10 of determining an estimated compression pressure in the cylinder. In a next step 12 of the method, the estimated compression pressure is compared with a pre-set reference pressure. Advantageously, the estimated compression pressure is an estimated peak compression pressure and the pre-set reference pressure is a peak compression pressure limit value i.e. a maximum pressure or a pressure limit that provides an optimal and safe running of the engine. Operating under this pre-set pressure limit, damage is prevented to occur in the cylinder and parts thereof. If the estimated compression pressure is below or equal to the pre-set reference pressure, a primary path 13 in the flow diagram is taken and normal running 14 of the engine is continued. In a next cycle of cylinder, the method returns via a line 19 to the step 10 of determining an estimated compression pressure, advantageously, an estimated peak compression pressure, in the cylinder.

If the estimated compression pressure is higher than the pre-set reference pressure, a secondary path 15 in the flow diagram is taken and the method comprises step 16 of admitting a portion of gas out of the cylinder during a compression phase and prior to ignition of a charge in the cylinder. This will prevent overpressure to occur in the cylinder e.g. in case of malfunction. According to an embodiment of the invention the method comprises step 16 of admitting the portion of gas in a controlled manner. In other words, the portion of gas is a controlled amount of gas. Thus the controlled amount of gas is admitted out of the cylinder during a compression phase and prior to ignition of a charge in the cylinder.

The step 16 of admitting the portion of gas out of the cylinder, advantageously, comprises steps of first opening 17 and thereafter closing 18 a safety valve or valves of a safety valve arrangement. The safety valve arrangement is adapted in connection with the cylinder. Advantageously, the safety valve is opened before ignition is initiated e.g. by triggering a spark or starting an injection of pilot fuel in case of a gas engine or dual fuel engine. In addition, the safety valve is closed before initiating the ignition of the combustible gas mixture i.e. the charge in the cylinder. After the step 16 of admitting the portion of gas out of the cylinder, the method returns to the step of continuing normal running 14 of the engine. In a next cycle of cylinder, the method returns via the line 19 to the step 10 of determining an estimated compression pressure, advantageously, an estimated peak compression pressure, in the cylinder. The method is applied individually to one or more cylinders, preferably to all the cylinder, cycle by cycle, and therefore admitting a portion of the gas out of one cylinder does not necessarily lead to the stopping of the engine,

It should be noted that the secondary path 15 is taken in a case of a malfunction or undesired operation conditions of inlet valve or valves or a super charger and an undesired increase of pressure. As mentioned earlier, too late closing timing of the inlet valve may lead to pressure increase in the cylinder, and by means of the present invention it is possible minimize the undesired effects of such an occurrence.

In normal operation conditions, i.e. when the estimated compression pressure is below or equal to the pre-set compression pressure, the safety valve remains closed. Advantageously, the estimated compression pressure is determined separately for each cylinder and for in each cycle.

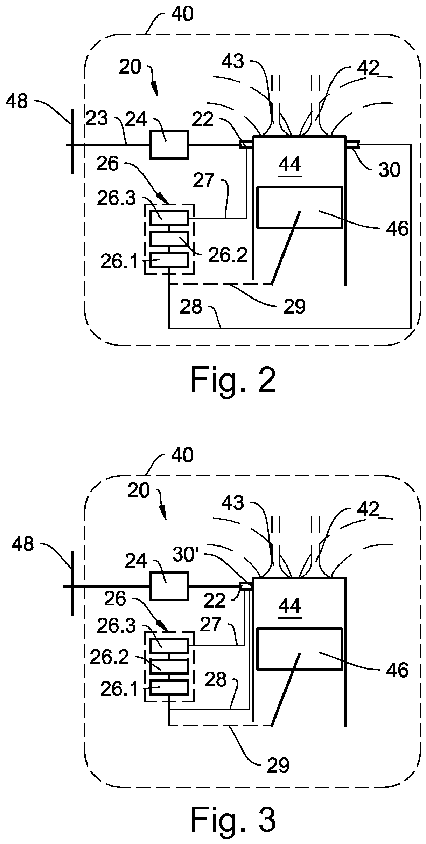

Figure 2 illustrates schematically an internal combustion piston engine 40. For sake of clarity only one cylinder 44 of the engine is shown here. The engine comprises also a piston 46 arranged to reciprocate inside the cylinder 44 and further at least one inlet valve 42 and exhaust valve 43 arranged in connection with the cylinder 44. In Figure 2, the inlet valve 42 and the exhaust valve 43 are in a closed position. Figure 2 specifically depicts a compression phase wherein the piston 46 moves towards its top dead center position.

The engine 40 is provided with a safety valve arrangement 20 arranged in connection with the cylinder 44. The safety valve arrangement 20 comprises at least one pressure sensor 30 in connection with the cylinder 44 for detecting pressure prevailing in the cylinder 40. Advantageously, the safety valve arrangement 20 comprises a measuring unit 26.1 that is arranged to measure pressure in the cylinder 44 with said at least one pressure sensor 30 after the inlet valve 42 is closed and before fuel is ignited in the combustion chamber of the engine. A signal from the pressure sensor or sensors is transferred to the measuring unit 26.1 via a communication line 28. According to an embodiment of the invention the pressure is measured at least at one predetermined crank angle position. According to an embodiment of the invention the pressure sensor 30 comprises a piezoelectric crystal sensor that provides a signal indicative to the pressure in the cylinder and which may be utilized by the control unit 26.

The pressure sensor 30 in connection with the cylinder 44 is not necessarily dedicated to the safety valve arrangement 20 only, but the pressure information provided by any sensor in connection with the cylinder 44 may be used in the method. In this case the information of the pressure prevailing in the cylinder can be delivered to the safety valve arrangement 20 by a transfer means. In other words, the transfer means is arranged for providing pressure information of the cylinder to the safety valve arrangement 20.

According to another embodiment of the invention the pressure in the cylinder is measured at more than one crank angle positions. Advantageously, the pressure measurements are carried out after the inlet valve is closed and after the piston has passed its bottom dead center position in the cycle.

The safety valve arrangement 20 comprises further a determination unit 26.2 arranged to determine an estimated compression pressure at least at a second crank angle position by using the at least one measured cylinder pressure.

In case the pressure in the cylinder is measured at more than one crank angle positions of the piston each of the pressure measurements are used for forming the estimated compression pressure with increased accuracy. That is because of the fact that the accuracy of the estimate for the compression pressure may be obtained using, for example, the least squares estimation. This way the estimated compression pressure is based on several measurement and it is determined and is available for taking actions on, before the crank angle the estimation concerns.

According to an embodiment of the invention, the second crank angle position is a zero crank angle position i.e. a top dead center position and thus the estimated compression pressure is an estimated peak compression pressure. In this context the compression pressure means the pressure in the combustion chamber of a cylinder resulted in combined effect of charge pressure and compression work of the piston. Therefore the pressure rise caused by combustion of fuel is excluded from the term compression pressure.

In addition, the determination unit 26.2 comprises instructions to compare the estimated compression pressure to a pre-set reference compression pressure. The safety valve arrangement 20 is provided with a control system 26.3 which is connected by a communication line 27 with a safety valve 22. The safety valve is adapted in connection with the cylinder 44. The safety valve is provided with an opening arranged to the liner of the cylinder at a location between the top and bottom dead center position of the piston. According to an embodiment of the invention, the safety valve is provided with an opening arranged to the liner of the cylinder at a location closer to the top dead center than the bottom dead center position of the piston. Advantageously, when the safety valve is arranged to a top portion of the cylinder, there is more time to measure, calculate, activate the safety valve arrangement and admit the portion of the gas out of the cylinder during a compression phase and prior to ignition of a charge in the cylinder.

The control system controls the operation of a safety valve 22 in a response of the estimated compression pressure. In case the estimated compression pressure is greater than the pre-set reference pressure, the control unit opens the safety valve 22 and admits a portion of gas out of the cylinder 44. Particularly, the portion of gas is admitted out of the cylinder 44 in a controlled manner so that the portion of gas is a controlled amount of gas. The operation of the safety valve 22 is timed to take place during the compression phase and prior to ignition of the charge in the cylinder 44. In the figure 2 the safety valve 22 is arranged into a liner of the cylinder 44. However, the safety valve 22 can be arranged in the cylinder head (not shown). It should be noted that there can be one or more safety valves arranged in connection with the cylinder but herein only one safety valve 22 is shown.

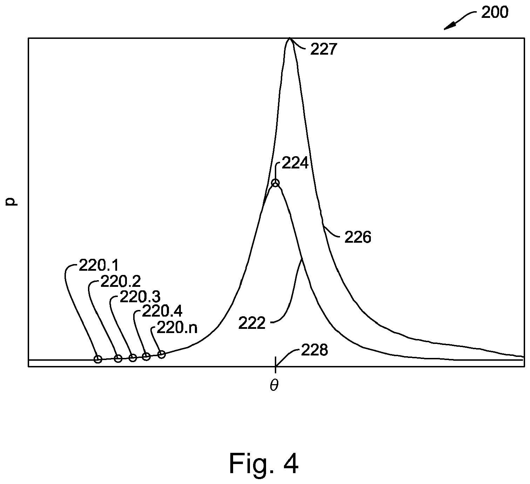

According to an embodiment of the invention, the measuring unit 26.1, the determination unit 26.2 and the control system 26.3 can be arranged into one physical unit which can be called as a control unit 26. Advantageously, the control unit 26 can be arranged to detect a crank angle position via a communication line 29. Using the crank angle position information, a corresponding cylinder volume or position of the piston can be determined, the purpose of which will be explained later in connection with the figure 4.

When the safety valve 22 opens, the portion of gas is admitted out from the cylinder 44. Thus the control unit 26 comprises instructions to determine a period of time the valve is maintained open so as to obtain a desired pressure in the cylinder 44. The arrangement comprises a gas handling unit 24 arranged to a discharge line 23. The discharge line 23 leads from the safety valve 22 and it is arranged to open into the surroundings, eventually. The gas is directed to a gas handling unit 24 via the safety valve 22 and the discharge line 23. The gas handling unit is arranged to cool down the gas. The gas handling unit may also be arranged to decrease the pressure of the gas. The gas which consists of the gas components in the cylinder of the engine is discharged from the handling unit 24 outside the engine, for example to the environment. Reference number 48 depicts a wall structure, for example a wall of the installation facility such as a marine vessel or a building where the engine 40 is installed. Thus the portion of gas is admitted outside of the facility.

Figure 3 illustrates schematically another embodiment of the safety valve arrangement 20. The safety valve arrangement comprises corresponding elements to the figure 2 referenced with corresponding numbers. Advantageously in this embodiment, the safety valve 22 comprises a piezoelectric crystal sensor 30' that controls the operation of the safety valve 22. The piezoelectric crystal sensor 30' is arranged to detect pressure or pressure differences in the cylinder 44. In this embodiment the piezoelectric crystal sensor is integrated into the safety valve 22. A signal from the piezoelectric crystal sensor 30' is transferred to the measuring unit 26.1 via a communication line 28. The operation of the embodiment of the figure 3 corresponds to that shown in figure 2, such that in case the estimated compression pressure is greater than the reference pressure, a portion of gas is admitted out of the cylinder 44 via the safety valve 22 during the compression phase prior to ignition of the charge in the cylinder 44.

Figure 4 illustrates schematically an exemplary graph 200 showing the behaviour of cylinder pressure in a function of a crank angle. There are two curves relating to one cylinder: a first curve 222 shows an estimated compression pressure (without combustion) and a second curve 226 shows a cylinder pressure including the effect of combustion of fuel in the cylinder. The first curve 222 is depicts as an estimated motored pressure curve, meaning that the engine is cranked without ignition and combustion of fuel. An estimated peak compression pressure 224 is shown in the estimated compression pressure curve 222 as its maximum value. The horizontal axis shows the crank angle position $\theta$ and the vertical axis shows the pressure $p$ in the cylinder. A mark 228 on the horizontal axis depicts a zero angle i.e. the TDC-position. As can be seen the estimated peak compression pressure 224 is located at the TDC-position.

Figure 4 illustrates schematically measured pressure values $p_1, ..., p_n$ at points 220.1, 220.2, 220.3, 220.4,..., 220.n in the cylinder 44 after closing the inlet valve 22 or valves of the cylinder 44. Specifically, the measured pressure values $p_1, ..., p_n$ at points 220.1, 220.2, 220.3, 220.4,..., 220.n are obtained from the compression phase and preferably when the piston 46 is located in a proximity of and after the BDC-position. This illustrates the aspect of the invention where the estimated compression pressure is determined based on several crank angle positions corresponding to the points 220.1, 220.2, 220.3, 220.4,..., 220.n . The estimated compression pressure is determined after the measurements for a first crank angle position when the actual crank angle position is less than the first crank angle position. Now the estimated compression pressure is compared to a pre-set reference pressure set for the first crank angle position ($\theta1$) and in case the estimated compression pressure is greater than the reference pressure, a portion of gas is admitted out of the cylinder 44 during the compression phase and prior the cycle reaches the first crank angle position.

It should be noted that in practice there are various approaches to determine the peak compression pressure. One approach, shown herein, is to use the measured cylinder pressure values and respective cylinder volume values when estimating the estimated peak compression value. In this embodiment the peak compression pressure 224 is estimated by using the measured pressure values $p_1, ..., p_n$ at points 220.1, 220.2, 220.3, 220.4,..., 220.n and corresponding cylinder volume information $V_1, ..., V_n$. The measured pressure values $p_1, ..., p_n$ correspond volume values $V_1, ..., V_n$. For determining the estimated peak compression pressure using the cylinder pressure and volume values, a so-called polytrophic relation can be written as

$$pV^\gamma = C,$$

where $p$ relates to a pressure at a certain volume $V$ in a cylinder, $\gamma$ is a so-called polytrophic index and $C$ is a constant (a real number). Furthermore, it is possible to write the polytrophic relation as follows

$$p_n V_n^\gamma = p_{TDC} V_{TDC}^\gamma,$$

where $p_n$ is a measured pressure during a compression phase at a certain volume $V_n$ in the cylinder, $p_{TDC}$ is the cylinder pressure at the top dead center position and $V_{TDC}$ is the cylinder volume at the top dead center position. The cylinder pressure $p_n$ and cylinder volume $V_n$ may be defined at any point during the compression phase. Rearranging the terms, one finds the estimate for the peak compression pressure (pressure at the top dead center position) as

$$p_{TDC} = p_n \left(\frac{V_n}{V_{TDC}}\right)^\gamma.$$

As it is clear $p_n$, $V_n$, $V_{TDC}$ and $\gamma$ are known and/or measurable, or otherwise determinable values and the peak compression pressure $p_{TDC}$ is an unknown term that can be solved. Estimation accuracy can be improved by increasing the number of pressure measurements. In case of several measurements of the cylinder pressure, a better estimate for the peak compression pressure $p_{TDC}$ is obtained using, for example, the least squares estimation.

Generally, an estimate for the polytrophic index $\gamma$ is also needed. According to an embodiment of the invention the polytrophic index $\gamma$ is a pre-configured value, and in that case real-time estimation for the polytrophic index $\gamma$ is not necessarily needed, but may still be done. In this case the control unit 26 comprises instructions for using a pre-configured value for the polytrophic index $\gamma$.

According to another embodiment of the invention the polytrophic index $\gamma$ is not pre-configured. Instead the polytrophic index $\gamma$ is estimated by any suitable method such as disclosed in a following procedure:

i. Setting an initial value of the polytrophic index,
ii. Calculating a model pressure curve based on the initial value of the polytrophic index,
iii. Calculating a model mismatch for each crank angle,
iv. Calculating a derivative with respect to the polytrophic index of the sum of squared mismatches,
v. Based on the outcome of the previous step, increasing or decreasing the polytrophic index by a predetermined amount,
vi. Reiterate steps ii to iv with the decreased or increased value of the polytrophic index,
vii. Calculate a second derivative with respect to polytrophic index of the sum of squared mismatches,
viii. Change value of the polytrophic indexes by an amount corresponding to the derivative divided by the second derivative with a negative sign, and
ix. Repeat steps ii, iii, iv, vii and viii until the amount corresponding to the absolute value of the derivative divided by the second derivative is smaller than a predetermined value.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. A method of operating an internal combustion piston engine (40), in which method during the engine is running, and during the cycle of the cylinder (44) an estimated compression pressure for the cylinder (44) is determined by measuring pressure in the cylinder after closing the inlet valve or valves (42) at least at one predetermined crank angle position ($\theta$) during a compression phase, the estimated compression pressure is compared to a pre-set reference pressure, **characterized in that** the estimated compression pressure is determined for a first crank angle position ($\theta_1$) when the actual crank angle position is less than the first crank angle position ($\theta_1$), and the estimated compression pressure is compared to a pre-set reference pressure set for the first crank angle position ($\theta_1$) and in case the estimated compression pressure is greater than the reference pressure, a controlled amount of gas is admitted out of the cylinder (44) during the compression phase and prior the cycle reaches the first crank angle position ($\theta_1$) by a safety valve (22) adapted in connection with the cylinder (44).

2. A method according to claim 1, **characterized in that** the estimated compression pressure is determined based on at least two distinct pressure measurements at least at two predetermined crank angle position ($\theta$).

3. A method according to anyone of claims 1-2, **characterized in that** the estimated compression pressure is determined based on measurements of pressure measured at less than ten distinct predetermined crank angle positions ($\theta$) during a compression phase.

4. A method according to anyone of claims 1-3, **characterized in that** the estimated compression pressure is determined at latest at crank angle ($\theta$) of 80 deg before top dead center during a compression phase.

5. A method according to of claim 1, **characterized in that** during the cycle of the cylinder (44) the inlet valve or valves (42) of the cylinder are closed before the BDC and in the method the closing timing of the inlet valve or valves is controlled making use of the estimated peak compression pressure of the previous cycle of the cylinder (44), and that during the cycle of the cylinder (44) after closing an inlet valve or valves (42) of the cylinder a fresh estimated peak compression pressure for the cylinder (44) is determined, and the fresh estimated peak compression pressure is compared to a pre-set reference peak pressure and in case the estimated compression pressure is greater than the reference pressure, a portion of gas is admitted out of the cylinder (44) during the compression phase and prior to ignition of charge in the cylinder (44).

**6.** A method according to of claim 5, **characterized in that** in the method a number the estimated peak compression pressure values of the previous cycles of the cylinder (44) are stored in a readable memory unit.

**7.** A method according to of claim 5, **characterized in that** the estimated peak compression pressure values of the previous cycles of the cylinder (44) are stored in a readable memory unit as a function of one or more of the following state parameters: engine rotational speed, engine load, charge pressure, inlet valve closing crank angle; and in the that the estimated compression pressure peak value of the previous cycles used for executing the step of the closing of the inlet valve or valves, is selected by defining condition parameters in the current cycle and using the estimated compression pressure peak value from the readable memory unit which match best to the condition parameters in the current cycle.

**8.** A method according to claim 1, **characterized in that** the estimated compression pressure is an estimated peak compression pressure and the estimated peak compression pressure for the cylinder (44) is compared to the pre-set reference pressure that is a pre-set peak compression pressure.

**9.** A method according to anyone of claims 1-8, **characterized in that** the estimated compression pressure is determined for each cylinder (44) separately.

**10.** A method according to anyone of claims 1-8, **characterized in that** admitting the controlled amount of gas out of the cylinder (44) during the compression phase prior to introduction of fuel.

**11.** An internal combustion piston engine (40) comprising at least one pressure sensor (30,30') in connection with a cylinder (44), and a measuring unit (26.1) arranged to measure pressure with said at least one pressure sensor (30, 30') after an inlet valve (42) is closed and before fuel is ignited at least at one predetermined crank angle position, a determination unit (26.2) arranged to determine an estimated compression pressure at least at a second crank angle position by using the at least one measured cylinder pressure and a control unit (26, 26.3) arranged to control an operation of a safety valve arrangement (20) adapted in connection with the cylinder (44) in a response of the estimated compression pressure, **characterized in that** the control unit (26, 26.3) is provided with executable instructions to execute the method recited in anyone of the claims 1-10.

**12.** An internal combustion piston engine (40) according to claim 11, **characterized in that** the safety valve arrangement (20) comprises a handling unit (24) for cooling and decreasing pressure of a portion of the admitted gas from the cylinder (44).

**13.** An internal combustion piston engine (40) according to anyone of claim 11-12, **characterized in that** the safety valve arrangement (20) comprises at least one safety valve (22) arranged in a liner of the cylinder (44).

**14.** An internal combustion piston engine (40) according to anyone of claims 11-12, **characterized in that** the safety valve arrangement (20) comprises at least one safety valve (22) arranged in a cylinder head.

**15.** An internal combustion piston engine (40) according to anyone of claims 11-12, **characterized in that** the safety valve arrangement (20) comprises a safety valve (22) having a piezoelectric crystal sensor (30').

**Patentansprüche**

**1.** Verfahren zum Betreiben einer Kolben-Verbrennungskraftmaschine (40), wobei in dem Verfahren, während die Kraftmaschine läuft und während des Zyklus des Zylinders (44) ein Verdichtungsdruck für den Zylinder (44) durch Messen des Drucks in dem Zylinder nach dem Schließen des Einlassventils oder der -ventile (42) an wenigstens einer vorbestimmten Kurbelwinkelstellung ($\theta$) während einer Verdichtungsphase bestimmt wird, wobei der geschätzte Verdichtungsdruck mit einem vorgegebenen Referenzdruck verglichen wird, **dadurch gekennzeichnet, dass** der geschätzte Verdichtungsdruck für eine erste Kurbelwinkelstellung ($\theta_1$) bestimmt wird, wenn die tatsächliche Kurbelwinkelstellung geringer ist als die erste Kurbelwinkelstellung ($\theta_1$), und der geschätzte Verdichtungsdruck mit einem vorgegebenen Referenzdruck verglichen wird, der für die erste Kurbelwinkelstellung ($\theta_1$) festgesetzt ist, und falls der geschätzte Verdichtungsdruck größer ist als der Referenzdruck, eine gesteuerte Menge an Gas aus dem Zylinder (44) während der Verdichtungsphase, und bevor der Zyklus die erste Kurbelwinkelstellung ($\theta_1$) erreicht, durch ein Sicherheitsventil (22), das in Verbindung mit dem Zylinder (44) angepasst ist, abgelassen wird.

**2.** Verfahren nach Anspruch 1, **dadurch gekennzeichnet, dass** der geschätzte Verdichtungsdruck auf Grundlage wenigstens zweier unterschiedlicher Druckmessungen bei wenigstens zwei vorbestimmten Kurbelwinkelstellungen ($\theta$) bestimmt wird.

**3.** Verfahren nach einem der Ansprüche 1 bis 2, **dadurch gekennzeichnet, dass** der geschätzte Verdichtungsdruck auf Grundlage von Messungen des Drucks bestimmt wird, der an weniger als zehn unterschiedlichen vorbestimmten Kurbelwinkelstellungen (θ) während einer Verdichtungsphase gemessen wird.

4. Verfahren nach einem der Ansprüche 1 bis 3, **dadurch gekennzeichnet, dass** der geschätzte Verdichtungsdruck bei wenigstens einem Kurbelwinkel (θ) von 80 Grad vor dem oberen Totpunkt während einer Verdichtungsphase bestimmt wird.

5. Verfahren nach Anspruch 1, **dadurch gekennzeichnet, dass** während des Zyklus des Zylinders (44) das Einlassventil oder die -ventile (42) des Zylinders vor dem UT geschlossen werden und in dem Verfahren die Schließzeit des Einlassventils oder der -ventile unter Verwendung des geschätzten Spitzenverdichtungsdrucks des vorhergehenden Zyklus des Zylinders (44) gesteuert wird und dass während des Zyklus des Zylinders (44) nach dem Schließen eines Einlassventils oder von -ventilen (42) des Zylinders ein frischer geschätzter Spitzenverdichtungsdruck für den Zylinder (44) bestimmt wird und der frische geschätzte Spitzenverdichtungsdruck mit einem vorgegebenen Referenzspitzendruck verglichen wird und falls der geschätzte Verdichtungsdruck größer ist als der Referenzdruck, eine gesteuerte Menge an Gas aus dem Zylinder (44) während der Verdichtungsphase und vor dem Zünden einer Ladung in dem Zylinder (44) abgelassen wird.

6. Verfahren nach Anspruch 5, **dadurch gekennzeichnet, dass** in dem Verfahren eine Anzahl der geschätzten Spitzenverdichtungsdruckwerte der vorhergehenden Zyklen des Zylinders (44) in einer auslesbaren Speichereinheit gespeichert werden.

7. Verfahren nach Anspruch 5, **dadurch gekennzeichnet, dass** die geschätzten Spitzenverdichtungsdruckwerte der vorhergehenden Zyklen des Zylinders (44) in einer auslesbaren Speichereinheit in Abhängigkeit von einem oder mehreren der folgenden Parameter gespeichert werden: Kraftmaschinendrehzahl, Kraftmaschinenlast, Ladedruck, Einlassventil-Schließkurbelwinkel, und dadurch, dass der geschätzte Spitzenverdichtungsdruckwert der vorhergehenden Zyklen, der zum Ausführen des Schrittes des Schließens des Einlassventils oder der -ventile verwendet wird, ausgewählt wird durch Definieren von Bedingungsparametern in dem gegenwärtigen Zyklus und Verwenden desjenigen geschätzten Spitzenverdichtungsdruckwertes aus der auslesbaren Speichereinheit, der am besten zu den Bedingungsparametern in dem gegenwärtigen Zyklus passt.

8. Verfahren nach Anspruch 1, **dadurch gekennzeichnet, dass** der geschätzte Verdichtungsdruck ein geschätzter Spitzenverdichtungsdruck ist und der geschätzte Spitzenverdichtungsdruck für den Zylinder (44) mit dem vorgegebenen Referenzdruck verglichen wird, der ein vorgegebener Spitzenverdichtungsdruck ist.

9. Verfahren nach einem der Ansprüche 1 bis 8, **dadurch gekennzeichnet, dass** der geschätzte Verdichtungsdruck für jeden Zylinder (44) gesondert bestimmt wird.

10. Verfahren nach einem der Ansprüche 1 bis 8, **dadurch gekennzeichnet, dass** das Ablassen der gesteuerten Menge an Gas aus dem Zylinder (44) während der Verdichtungsphase vor dem Einleiten von Kraftstoff erfolgt.

11. Kolben-Verbrennungskraftmaschine (40), die wenigstens einen Drucksensor (30, 30') in Verbindung mit einem Zylinder (44) und eine Messeinheit (26.1), die dafür angeordnet ist, den Druck mit dem wenigstens einen Drucksensor (30, 30'), nachdem ein Einlassventil (42) geschlossen ist und bevor Kraftstoff gezündet wird, an wenigstens einer vorbestimmten Kurbelwinkelstellung zu messen, eine Bestimmungseinheit (26.2), die dafür angeordnet ist, einen geschätzten Verdichtungsdruck an wenigstens einer zweiten Kurbelwinkelstellung durch Verwenden des wenigstens einen gemessenen Zylinderdrucks zu bestimmen, und eine Steuereinheit (26, 26.3), die dafür angeordnet ist, einen Betrieb einer Sicherheitsventilanordnung (20), die in Verbindung mit dem Zylinder (44) angepasst ist, in Reaktion auf den geschätzten Verdichtungsdruck zu steuern, umfasst, **dadurch gekennzeichnet, dass** die Steuereinheit (26, 26.3) mit ausführbaren Anweisungen versehen ist, um das Verfahren nach einem der Ansprüche 1 bis 10 auszuführen.

12. Kolben-Verbrennungskraftmaschine (40) nach Anspruch 11, **dadurch gekennzeichnet, dass** die Sicherheitsventilanordnung (20) eine Handhabungseinheit (24) zum Kühlen und Senken des Drucks eines Teils des Gases, das aus dem Zylinder (44) abgelassen wird, umfasst.

13. Kolben-Verbrennungskraftmaschine (40) nach einem der Ansprüche 11 bis 12, **dadurch gekennzeichnet, dass** die Sicherheitsventilanordnung (20) wenigstens ein Sicherheitsventil (22) umfasst, das in einer Laufbuchse des Zylinders (44) angeordnet ist.

14. Kolben-Verbrennungskraftmaschine (40) nach einem der Ansprüche 11 bis 12, **dadurch gekennzeichnet, dass** die Sicherheitsventilanordnung (20) wenigstens ein Sicherheitsventil (22) umfasst, das in einem Zylinderkopf angeordnet ist.

**15.** Kolben-Verbrennungskraftmaschine (40) nach einem der Ansprüche 11 bis 12, **dadurch gekennzeichnet, dass** die Sicherheitsventilanordnung (20) ein Sicherheitsventil (22) umfasst, das einen piezoelektrischen Kristallsensor (30') aufweist.

## Revendications

**1.** Procédé de fonctionnement d'un moteur à piston à combustion interne (40), dans lequel procédé pendant le fonctionnement du moteur, et pendant le cycle du cylindre (44), une pression de compression estimée pour le cylindre (44) est déterminée en mesurant la pression dans le cylindre après fermeture de la ou des soupapes d'admission (42) au moins à un position d'angle de vilebrequin prédéterminée ($\theta$) pendant une phase de compression, la pression de compression estimée est comparée à une pression de référence préréglée, **caractérisé en ce que** la pression de compression estimée est déterminée pour une première position d'angle de vilebrequin ($\theta_1$) lorsque l'angle de vilebrequin réel est inférieur à la première position d'angle de vilebrequin ($\theta_1$), et la pression de compression estimée est comparée à une pression de référence préréglée définie pour la première position d'angle de vilebrequin ($\theta_1$) et dans le cas où la pression de compression estimée est supérieure à la pression de référence, une quantité contrôlée de gaz est admise hors du cylindre (44) pendant la phase de compression et avant que le cycle n'atteigne la première position de vilebrequin ($\theta_1$) par une soupape de sécurité (22) adaptée en liaison avec le cylindre (44) .

**2.** Procédé selon la revendication 1, **caractérisé en ce que** la pression de compression estimée est déterminée sur la base d'au moins deux mesures de pression distinctes à au moins deux positions prédéterminées d'angle de vilebrequin ($\theta$).

**3.** Procédé selon une quelconque des revendications 1 à 2, **caractérisé en ce que** la pression de compression estimée est déterminée sur la base des mesures de pression mesurées à moins de dix positions d'angle de vilebrequin prédéterminées distinctes ($\theta$) pendant une phase de compression.

**4.** Procédé selon une quelconque des revendications 1 à 3, **caractérisé en ce que** la pression de compression estimée est déterminée au plus tard à un angle de vilebrequin ($\theta$) de 80 degrés avant le point mort haut pendant une phase de compression.

**5.** Procédé selon la revendication 1, **caractérisé en ce que** pendant le cycle du cylindre (44) la ou les soupapes d'admission (42) du cylindre sont fermées avant le BDC et dans le procédé, la synchronisation de fermeture de la ou des soupapes d'admission est commandée en utilisant la pression de compression de pointe estimée du précédent cycle du cylindre (44), et que pendant le cycle du cylindre (44) après la fermeture d'une ou de plusieurs soupapes d'admission (42) du cylindre, une nouvelle pression de compression maximale estimée pour le cylindre (44) est déterminée, et la nouvelle pression de compression maximale estimée est comparée à une pression de pointe de référence prédéfinie et dans le cas où la pression de compression estimée est supérieure à la pression de référence, une partie du gaz est admise hors du cylindre (44) pendant la phase de compression et avant l'allumage de la charge dans le cylindre (44).

**6.** Procédé selon la revendication 5, **caractérisé en ce que** dans le procédé, un certain nombre des valeurs de pression de compression de crête estimées des cycles précédents du cylindre (44) sont mémorisées dans une unité de mémoire lisible.

**7.** Procédé selon la revendication 5, **caractérisé en ce que** les valeurs maximales estimées de pression de compression des cycles précédents du cylindre (44) sont mémorisées dans une unité de mémoire lisible en fonction d'un ou plusieurs des paramètres d'état suivants: vitesse de rotation du moteur, charge du moteur, pression de suralimentation, angle de vilebrequin de fermeture de soupape d'admission; et **en ce que** la valeur de crête de pression de compression estimée des cycles précédents utilisée pour exécuter l'étape de fermeture de la ou des soupapes d'admission, est sélectionnée en définissant des paramètres de condition dans le cycle en cours et en utilisant la valeur de crête de pression de compression estimée à partir de l'unité de mémoire lisible qui correspond le mieux aux paramètres de condition dans le cycle actuel.

**8.** Procédé selon la revendication 1, **caractérisé en ce que** la pression de compression estimée est une pression de compression de crête estimée et la pression de compression de crête estimée pour le cylindre (44) est comparée à la pression de référence préréglée qui est une pression de compression de pic préréglée.

**9.** Procédé selon une quelconque des revendications 1-8, **caractérisé en ce que** la pression de compression estimée est déterminée séparément pour chaque cylindre (44) .

**10.** Procédé selon une quelconque des revendications 1-8, **caractérisé en ce qu'**on admet la quantité contrôlée de gaz hors du cylindre (44) pendant la phase de compression avant l'introduction du carburant.

**11.** Moteur à piston à combustion interne (40) comprenant au moins un capteur de pression (30, 30') en liaison avec un cylindre (44), et une unité de mesure (26.1) agencée pour mesurer la pression avec ledit au moins un capteur de pression (30, 30') après la fermeture d'une soupape d'admission (42) et avant l'allumage du carburant au moins à une position d'angle de vilebrequin prédéterminée, une unité de détermination (26.2) agencée pour déterminer une pression de compression estimée à au moins à une deuxième position d'angle de vilebrequin en utilisant l'au moins une pression de cylindre mesurée et une unité de commande (26, 26.3) agencée pour commander le fonctionnement d'un agencement de soupape de sécurité (20) adapté en liaison avec le cylindre (44) en réponse à la pression de compression estimée, **caractérisé en ce que** l'unité de commande (26, 26.3) est pourvue d'instructions exécutables pour exécuter le procédé décrit dans une quelconque des revendications 1 à 10.

**12.** Moteur à piston à combustion interne (40) selon la revendication 11, **caractérisé en ce que** l'agencement de soupape de sécurité (20) comprend une unité de manutention (24) pour refroidir et diminuer la pression d'une partie du gaz admis du cylindre (44).

**13.** Moteur à piston à combustion interne (40) selon une quelconque des revendications 11 à 12, **caractérisé en ce que** l'agencement de soupape de sécurité (20) comprend au moins une soupape de sécurité (22) disposée dans une chemise du cylindre (44).

**14.** Moteur à piston à combustion interne (40) selon une quelconque des revendications 11 à 12, **caractérisé en ce que** l'agencement de soupape de sécurité (20) comprend au moins une soupape de sécurité (22) disposée dans une culasse.

**15.** Moteur à piston à combustion interne (40) selon une quelconque des revendications 11 à 12, **caractérisé en ce que** l'agencement de soupape de sécurité (20) comprend une soupape de sécurité (22) ayant un capteur à cristal piézoélectrique (30').

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2570637 A2
- WO 2014126737 A1
- US 2012279218 A1
- US 2010077992 A